# EUROPÄISCHE PATENTSCHRIFT

(11) **EP 0 803 659 B1**
(45) Veröffentlichungstag und Bekanntmachung des Hinweises auf die Patenterteilung: **19.12.2001**
(21) Anmeldenummer: 97102611.7
(22) Anmeldetag: 19.02.1997
(51) Int. Cl.: F16F 15/14

(54) **Kurbelwelle mit Schwingungsdämpfer**
Crankshaft with vibration damper
Vilebrequin avec amortissuer de vibrations

(30) Priorität: 22.04.1996 DE 19615890
(43) Veröffentlichungstag der Anmeldung: 29.10.1997
(73) Patentinhaber: Firma Carl Freudenberg, 69469 Weinheim (DE)
(72) Erfinder: Eckel, Hans-Gerd, Dr., 69514 Laudenbach (DE)

(56) Entgegenhaltungen:
- CH-A- 163 966
- DE-A- 4 426 317
- US-A- 2 448 973
- US-A- 2 449 087
- US-A- 2 454 720
- US-A- 4 674 356

## Beschreibung

### Technisches Gebiet

Die Erfindung betrifft eine Kurbelwelle einer periodisch angeregten Kraft- oder Arbeitsmaschine mit einem daran festgelegten Tilger, der zumindest einen um eine Rotationsachse drehbaren Nabenteil sowie mehrere Tilgermassen umfaßt, die um von der Rotationsachse beabstandete Schwenkachsen der Rotationsbewegung folgend schwenkbar sind, wobei sich der Schwerpunkt der jeweiligen Tilgermasse drehzahlabhängig dadurch verlagert, daß die Schwenkachsen der Tilgermassen in Abhängigkeit der Drehzahl radial verlagerbar geführt sind.

### Stand der Technik

Eine Kurbelwelle mit einem Tilger zu versehen ist aus der GB PS 598 811 bekannt. Dabei werden jedoch keine Angaben gemacht, an welcher Stelle der Kurbelwelle der Tilger anzubringen ist.

Aus der US 4,674,356 und DE 44 26 317 A1 ist es bekannt, daß der Tilger direkt an einem mit der Kurbelwelle verbundenen Schwungrad der Kraft- oder Arbeitsmaschine abgebracht ist.

Weiterhin ist es bekannt, auf der Eingangswelle eines über eine Kupplung mit der Kurbelwelle zusammenwirkenden Getriebes einen Tilger zu befestigen, um von der periodisch angeregten Kraft- oder Arbeitsmaschine erzeugte Schwingungen zu dämpfen.

Die der Erfindung zugrundeliegende Aufgabe besteht darin, eine Kurbelwelle gemäß GB PS 598 811 derart weiterzubilden, daß in wirtschaftlicher Weise die von der periodisch angeregten Kraft- oder Arbeitsmaschine herrührenden Schwingungen getilgt werden können und daß ein Kupplungsdeckel kompakte Abmessungen und eine geringe Wandstärke aufweist.

### Darstellung der Erfindung

Gemäß der Erfindung wird der Tilger direkt an einem mit der Kurbelwelle verbundenen Schwungrad der Kraft- oder Arbeitsmaschine angebracht und der Tilger weist ein Widerlager für eine Anpreßfeder einer Kupplung auf. Dies hat den Vorteil, daß ein bestehendes Bauteil im Funktionsumfang erweitert werden kann, wobei gerade die radiale Ausdehnung der Schwungscheibe dafür geeignet ist. Weiterhin hat die Erfindung den Vorteil, daß durch die Anordnung des Tilgers an der Schwungscheibe der Kurbelwelle die üblicherweise verwendeten Schwungmassen der Kraft- oder Arbeitsmaschine verringert werden können. Dies ist besonders dann von Vorteil, wenn wie in der Automobilindustrie um jede Verringerung der Masse gekämpft wird.

Der Tilger ist mit einem Widerlager für eine Anpreßfeder einer Kupplung versehen, so daß der Kupplungsdeckel von dieser Funktion entlastet wird. Bei herkömmlichen Kupplungen muß der Kupplungsdeckel zusätzlich zu der Übertragung des Drehmoments auch die Reaktionskräfte am Widerlager der Anpreßfeder aufnehmen. Die

Die Erfindung führt zu einer Verkürzung des Kupplungsdeckels und zu einer Verringerung der Wandstärke, da lediglich das Drehmoment übertragen werden muß.

Dank der erfindungsgemäßen Kurbelwelle ist es weiterhin oftmals möglich, eine bislang übliche, zwischen der Kurbelwelle und der Kupplung angebrachte Drehfeder zum Ausgleich von Drehschwingungen einzusparen, da der Triebstrang dank der erfindungsgemäßen Kurbelwelle eine ausreichende Laufruhe aufweist. Falls dennoch eine Drehfeder notwendig ist, kann diese anders angelegt werden, was zu einer weiteren Verbesserung führen kann.

Eine Weiterbildung der Erfindung besteht darin, daß zwischen dem Schwungrad und dem Tilger eine Kupplungsscheibe, eine Druckplatte und ein Kupplungsdeckel angeordnet ist. Die derartige Anordnung des Tilgers erlaubt eine platzsparende Bauweise, da die Kupplung durch die Schwungscheibe einerseits und den mit dieser verbundenen Tilger andererseits umgriffen wird.

Weiterhin ist es vorteilhaft, den Tilger mit Führungsbolzen für die Druckplatte zu versehen, da auf diese Weise der Kupplungsdeckel insgesamt entfallen kann. Der schon aus schwingungstechnischen Gründen stark dimensionierte Tilger übernimmt dann sowohl die Übertragung des Drehmoments auf die Druckplatte als auch die Funktion des Widerlagers für die auf die Druckplatte wirkende Anpreßfeder.

Die folgenden Unteransprüche beziehen sich auf vorteilhafte Ausgestaltungen des Tilgers, ausgehend von der GB PS 598 811. Dort werden die Kurvenbahnen dabei durch Teilbereiche der Wandung von Bohrungen gebildet, die einen erheblich größeren Durchmesser haben als die Bolzen. Bei Einleitung von Drehschwingungen in einen solchen Drehschwingungstilger wälzen sich die Bolzen auf den die Bohrungen begrenzenden Wandungen, die die Kurvenbahnen bilden, ab, was dazu führt, daß sich der Abstand zwischen einer jeden Tilgermasse und der Rotationsachse im Verlauf einer jeden Einzelschwingung ständig verändert. Ein solcher Tilger hat eine der Drehzahl proportionale Eigenfrequenz, so daß Drehschwingungen mit Frequenzen, die der Drehzahl proportional sind, im gesamten Drehzahlbereich tilgbar sind. Derartige der Drehzahl proportionale Frequenzen haben alle periodisch arbeitenden Maschinen, wie z. B. die Verbrennungsmotoren von Kraftfahrzeugen.

Bei der aus der GB PS 589 811 bekannten Kurbelwelle mit drehzahladaptivem Tilger werden die Bolzen und die Kurvenbahnen nur bei drehender Welle aufeinander gepreßt. Sämtliche Tilgermassen umkreisen die Rotationsachse bei gleichförmig drehender Welle stets im größtmöglichen Abstand. Dieser Zustand wird jedoch gestört, wenn die Drehbewegung zum Erliegen kommt. Unter dem Einfluß der Gravitation verlagern sich dann sämtliche Teile hin zu einer Stelle, an der sie den kleinstmöglichen Abstand vom Erdmittelpunkt haben. Die in Umfangsrichtung des drehzahladaptiven Tilgers verteilten Tilgermassen und Bolzen haben somit in diesem Zustand Abstände von der Rotationsachse, die voneinander verschieden sind.

Bei drehzahladaptiven Tilgern, die sich gelegentlich in einer Drehbewegung und gelegentlich in einem ruhenden Zustand befinden, macht sich der Übergang vom drehenden in den ruhenden Zustand insofern unangenehm bemerkbar, als sich die gerade auf der vom Erdmittelpunkt abgewandten Seite der Rotationsachse befindlichen Tilgermassen plötzliche herabfallen, wobei die Bolzen in der Bohrung plötzliche auf die jeweils gegenüberliegende, metallische Wandung aufschlagen. Dabei ergeben sich metallische Anschlaggeräusche. Der gleiche Effekt ist beim Einsetzen der Drehbewegung nach vorausgegangenem Stillstand zu beobachten.

Mit weiteren Ausgestaltungen soll eine Kurbelwelle mit drehzahladaptivem Tilger der eingangs genannten Art derart weiterentwikkelt werden, daß die Lagerung der Tilgermassen am Anfang und am Ende einer Drehbewegung nicht mehr zu einer unzulässigen Geräuschbildung führen kann.

Die geschieht dadurch, daß jede Tilgermasse durch zwei in Umfangsrichtung beabstandete, sich parallel zur Rotationsachse erstreckende Bolzen in dem Nabenteil gelagert ist und wobei die Bolzen auf Kurvenbahnen abrollbar sind, die im Bereich des Nabenteils ein U-förmig in Richtung der Rotationsachse und im Bereich der Tilgermassen ein U-förmig in die entgegengesetzter Richtung geöffnetes Profil haben und daß die Bolzen auf den von den jeweiligen Kurvenbahnen abgewandten Seiten durch eine Führungsbahn geführt sind. Die Bolzen werden durch die Führungsbahnen auf der von den Kurvenbahnen abgewandten Seite nach Überwindung eines geringen Spiels bereits abgestützt, bevor sich eine große Relativgeschwindigkeit ergibt. Das Auftreten von Anschlaggeräuschen läßt sich dadurch unter allen in Frage kommenden Betriebsbedingungen auf akzeptable Werte begrenzen.

Um die Sicherheit gegen betriebsbedingte Anschlaggeräusche noch weiter zu verbessern, hat es sich als vorteilhaft bewährt, wenn die Führungsbahnen aus polymerem Werkstoff bestehen, beispielsweise aus Polyurethan oder Polyamid.

Es ist auch möglich, einen elastomeren Werkstoff zu verwenden. Durch die elastischen Eigenschaften resultiert bei einer solchen Ausbildung eine besonders hochgradige Dämpfung von Anschlaggeräuschen.

Die Dämpfungsschichten können in Umfangsrichtung beiderseits in Anschlagflächen enden, durch die die Umfangsbeweglichkeit der Bolzen auf einen festen Wert begrenzt ist. Die resultierende Öffnung, in der ein jeder Bolzen beweglich ist, ist von nierenförmigem Umriß. Sie wird in einem ersten Teilbereich durch die Kurvenbahnen begrenzt, auf der die Bolzen abrollbar sind, in einem zweiten Teilbereich durch die Führungsbahnen, durch die die Bolzen beim Nichtdrehen des Drehschwingungstilgers abstützbar sind und in Umfangsrichtung beiderseits durch die Anschlagflächen, die die Umfangsbeweglichkeit des Bolzens begrenzen. Sämtliche Teilflächen gehen idealerweise unter Vermeidung von sprunghaften Richtungsänderungen kontinuierlich ineinander über.

Die Kurvenbahnen und die Führungsbahnen können Bestandteile von Einsatzteilen bilden, die in Ausnehmungen des Nabenteils und/oder der Tilgermassen einclipsbar sind. Sie können hinsichtlich der Größe und Dimensionierung in Abhängigkeit von dem jeweiligen Anwendungsfall modifiziert sein und lassen es zu, den jeweiligen Tilger einem bestimmten Anwendungsfall in gezielter Weise anzupassen. Die Montage ist sehr einfach. Sie kann auch durch einfaches Einstecken in die Ausnehmungen erfolgen und die zusätzliche Verwendung von Klebstoffen, Verschraubungen und/oder Nieten einbeziehen.

Es hat sich als besonders vorteilhaft bewährt, wenn die Dämpfungsschicht durch unmittelbares Anformen und Verfestigen des sie bildenden Werkstoffkörpers mit den die Kurvenbahnen tragenden Einsatzstücken und Ausnehmungen verbunden ist. Dabei ergibt sich der sekundäre Vorteil einer gegenseitigen Verklebung, eines Toleranzausgleichs zwischen den Einsatzstücken und den Ausnehmungen sowie eine wackelsichere Festlegung der Einsatzstücke in den Ausnehmungen. Die Einbringung und Verfestigung des die Dämpfungsschicht bildenden Werkstoffkörpers kann beispielsweise im Zuge eines Spritzprozesses erfolgen.

### Kurzbeschreibung der Zeichnung

Der Gegenstand der Erfindung wird nachfolgend anhand der Zeichnungen weiter verdeutlicht. Es zeigt:
- Fig. 1:: Eine Bauform eines drehzahladaptiven Tilgers in einer Ansicht von vorn,
- Fig. 2:: Ein Einsatzteil zum Einfügen in das Nabenteil bzw. die Tilgermassen des drehzahladaptiven Tilgers nach Figur 1.
- Fig. 3:: Einen drehzahladaptiven Tilger in quergeschnittener Darstellung.
- Fig. 4:: Eine Kurbelwelle mit dem drehzahladaptiven Tilger gemäß einer der Fig. 1 bis 3.

### Ausführung der Erfindung

Der in den Zeichnungen wiedergegebene drehzahladaptive Tilger umfaßt ein um eine Rotationsachse drehbares Nabenteil 1 sowie mehrere Tilgermassen 2, die um von der Rotationsachse 3 beabstandete Schwenkachsen der Rotationsbewegung 4 mehr oder weniger folgend schwenkbar sind, wobei jede Tilgermasse 2 durch zwei in Umfangsrichtung beabstandete, sich parallel zur Rotationsachse 3 erstrekkende Bolzen 5 in dem Nabenteil gelagert ist und wobei die Bolzen 5 auf Kurvenbahnen 6 abrollbar sind, die im Bereich des Nabenteils 1 ein U-förmig in Richtung der Rotationsachse 3 und im Bereich der Tilgermassen 2 ein U-förmig in die entgegengesetzte Richtung geöffnetes Profil haben. Die Bolzen 5 werden auf den von den jeweiligen Kurvenbahnen 6 abgewandten Seiten durch eine Führungsbahn 7 geführt. Diese besteht aus einer Führungsschicht 8 aus polymerem Werkstoff, beispielsweise aus Gummi. Die Führungsbahnen 7 sind beiderseits durch Anschlagflächen 9 begrenzt, die zugleich die Umfangsbeweglichkeit des jeweiligen Bolzens 5 auf einen festen Wert begrenzen. Der Durchmesser des Bolzens 5 ist so mit dem radialen Abstand zwischen der jeweiligen Kurvenbahn 6 und der zugehörigen Führungsbahn 7 abgestimmt, daß kein oder zumindest kein nennenswertes Spiel vorhanden ist.

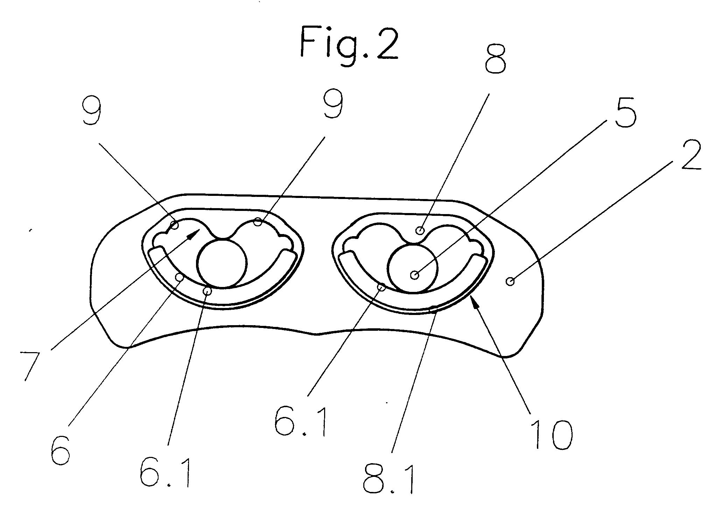

Die Kurvenbahnen 6 und die Führungsbahnen 7 bilden Bestandteile von Einsatzteilen, die in Ausnehmungen 10 des Nabenteils 1 und der Tilgermassen 2 unverlierbar aufgenommen sind, beispielsweise durch Einclipsen. Der Umfang der Ausnehmungen 10 in den Tilgermassen 2 gemäß Figur 2 wird durch eine gestrichelte Linie angedeutet. Die Tilgermassen 2 können auch einen von Figur 2 abweichenden Umriß haben, beispielsweise einen rechteckig begrenzten Umriß. Die Herstellung ist bei einer entsprechenden Ausbildung zwar einfacher, jedoch ergibt sich zwangsläufig ein gewisser Verlust hinsichtlich der Größe der theoretisch erreichbaren Tilgermasse.

Die die Kurvenbahnen 6 bildenden Einsatzstücke 6.1/6.2 können auch lose die Ausnehmungen 10 eingefügt und durch nachträgliches Einformen der die Führungsbahnen 7 tragenden Dämpfungsschichten 8 mit den Ausnehmungen 10 und den Einsatzstücken 6.1 verklebt sein (Fig. 2). Dabei ergibt sich nicht nur ein wackelsicherer, spielfreier Sitz der Einsatzstücke 6.1 sondern darüber hinaus eine absolut präzise Zuordnung der Kurven- und Führungsbahnen 6,7 zu den Tilgermassen 2 bzw. zu der Rotationsachse des Nabenteils 1. Dem Auftreten von unerwünschten Unwuchterscheinungen während der Rotation des Tilgers läßt sich dadurch begegnen. Als besonders zweckmäßig hat es sich erwiesen, wenn die Einsatzstücke durch Strangpressen erzeugt sind. Sie verfügen hierdurch über eine ausgezeichnete Oberflächenqualität. Die Ausnehmungen können demgegenüber durch einen Stanzprozeß erzeugt sein. Die dabei zu beobachtenden Oberflächenungenauigkeiten werden beim Einformen des die Dämpfungsschichten 8 bildenden Werkstoffkörpers selbsttätig ausgeglichen.

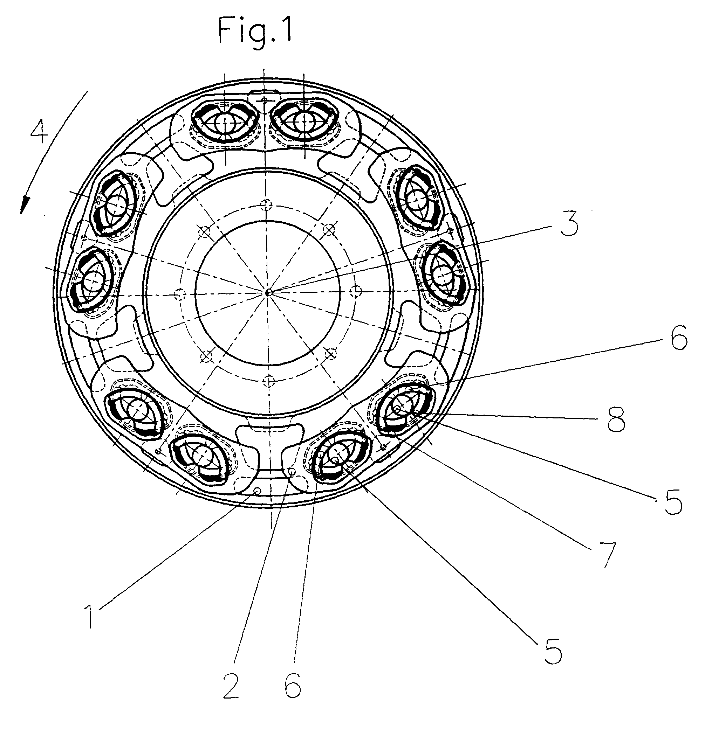

Bei dem gezeigten Ausführungsbeispiel nach den Figuren 1 bis 3 wird der Nabenteil 1 im Bereich seines Außenumfangs durch einen Flansch gebildet, dem die Tilgermassen 2 in axialer Richtung beiderseits benachbart sind. Die Tilgermassen 2 sind in dem Nabenteil 1 auf Bolzen 5 gelagert, die auf den von den jeweiligen Kurvenbahnen 6 abgewandten Seiten radial durch eine Führungsbahn 7 geführt und in radialer Richtung abgestützt sind.

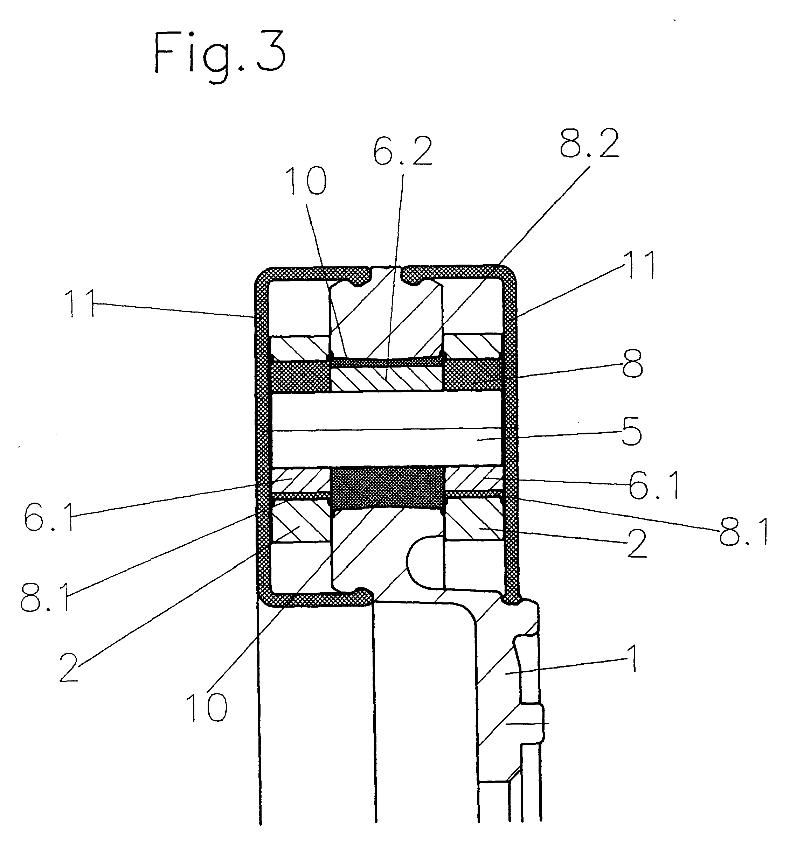

Die Bolzen 5 sind von zylindrischer Gestalt. Sie können bedarfsweise durch Rohre gebildet sein. Um ein Herausfallen in axialer Richtung zu verhindern, sind Kappen 11 aus Kunststoff vorgesehen, die unverrückbar an dem Nabenteil 1 festgelegt sind und die Bolzen 5 im Bereich der beiden Enden überdecken. In dem verbleibenden Freiraum 12 sind zugleich die Tilgermassen 2 aufgenommen. Sie werden neben den Bolzen 5 durch die Kappen 11 daran gehindert, eine, bezogen auf Figur 3, abweichende Zuordnung zu dem Nabenteil 1 in axialer Richtung einzunehmen. Die Kappen 11 können auch aus Metall bestehen.

Die sich während der bestimmungsgemäßen Verwendung des gezeigten drehzahladaptiven Tilgers ergebende Funktion besteht darin, daß sich eine Abwälz-Bewegung der Bolzen 5 auf den Kurvenbahnen 6 ergibt mit der Folge, daß sich der radiale Abstand zwischen den Tilgermassen 2 und der Rotationsachse 3 stetig verändert. Die Folge ist eine Tilgerwirkung, die im gesamten Drehzahlbereich verfügbar ist.

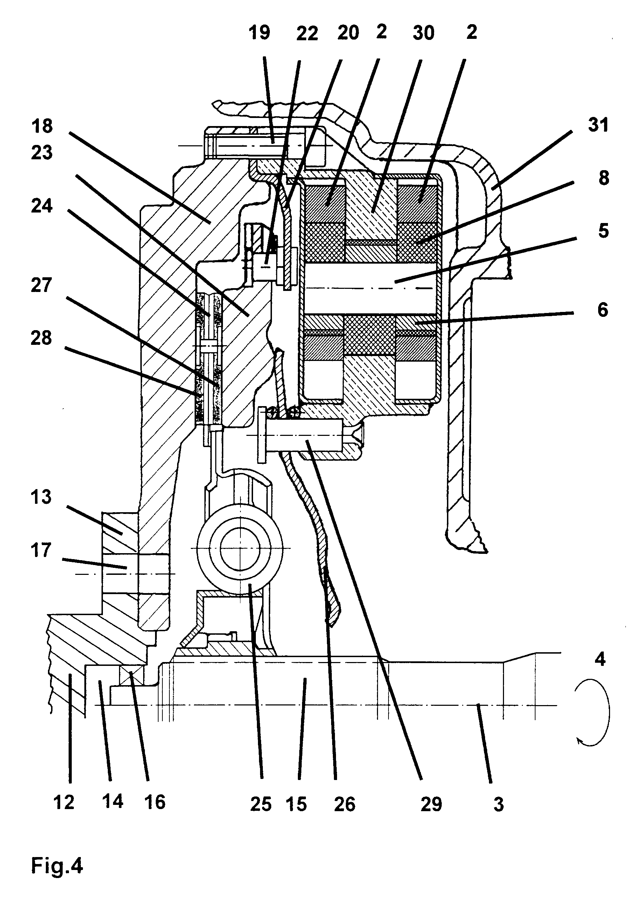

In Fig. 4 ist ein den Fig. 1 bis 3 entsprechender Tilger in drehfester Verbindung mit einer Kurbelwelle 12 einer periodisch angeregten Kraft- oder Arbeitsmaschine dargestellt. Die Kurbelwelle ist an ihrem Ende 13 mit einer zentralen Bohrung 14 versehen, in welcher eine Getriebeeingangswelle 15 mittels eines schematisch dargestellten Lagers 16 drehbar gelagert ist. Weiterhin weist das Ende 13 eine Verbindungsstelle 17 mit einem Schwungrad 18 auf. Das Schwungrad 18 erstreckt sich scheibenförmig von der Rotationsachse weg. Auf der Getriebeseite des Schwungrads 18 ist eine Kupplung 20 bis 30 angeordnet. Die Kupplung weist einen Kupplungsdeckel 20 auf, der am Außenumfang drehfest mit der Scheibe 18 mittels Verbindungmitteln 19 verbunden ist. In dem Kupplungsdeckel 20 sind Bolzen 22 eingelassen, welche eine axial verschiebbare Druckplatte 23 radial führen. Zwischen der Druckplatte 23 und der Scheibe 18 befindet sich eine Kupplungsscheibe 24 die über eine Drehfeder 25 mit der Getriebeeingangswelle 15 verbunden ist. Mittels einer Tellerfeder 26, auch als Anpreß- oder Membranfeder bekannt, wird die Druckplatte 23 entsprechend der Betätigung der Kupplung gegen die beiderseits mit Reibbelägen 27, 28 versehene Kupplungsscheibe 24 gepreßt. Die Tellerfeder 26 ist in drei Positionen dargestellt.

Im getriebeseitigen Außenbereich der Schwungscheibe 18 ist die Nabe 30 des Tilgers mittels der Verbindungsmittel 19 drehfest mit der Schwungscheibe 18 verbunden. Der Tilger weist mehrere Tilgermassen 2 auf, welche durch zwei in Umfangsrichtung beabstandete, sich parallel zur Rotationsachse 3 erstreckende Bolzen 5 gelagert sind. Dieser Tilger entspricht in dem Aufbau im Bereich der Tilgermassen dem Tilger aus Fig. 1 bis 3, wobei die Tilgernabe 30 jedoch nicht auf ihrem Innenumfang mit der Welle verbunden ist, sondern auf ihrem Außenumfang mit der Schwungscheibe 18. Am Innenumfang der Nabe 30 befindet sich ein Widerlager 29 der Tellerfeder 26. Dieses Widerlager 29 nimmt die bei der Betätigung der Kupplung entstehenden Gegenkräfte auf und leitet sie in die Nabe 30 ein, welche mit dem Schwungrad 18 fest verbunden ist. Die Nabe 30 ist dabei derart dimensioniert, daß die Kräfte des Widerlagers 29 problemlos aufgenommen werden können. Dies steht im Gegensatz zu herkömmlichen Kupplungen, bei denen der Kupplungsdeckel über Bolzen die Drehbewegung auf eine Druckplatte überträgt und außerdem das Widerlager für die Tellerfeder bildet. Bei diesen bekannten Kupplungen muß der Kupplungsdeckel daher entsprechend stark ausgeführt werden.

Sowohl die Kupplung als auch der Tilger sind von einer Kupplungsglocke 31 umschlossen.

Durch das Abstützen der Tellerfeder 26 an der Tilgernabe 30 wird eine Reduzierung der axialen Baulänge und der Masse erreicht. Der Kupplungsdeckel 20 hat nur drehmomentübertragende Funktion und keine Widerlagerfunktion für die Tellerfeder 26. Daher reicht eine deutlich schwächere Ausführung des Kupplungsdeckel 20 aus, da sowohl die auf das Widerlager wirkenden Kräfte als auch das Biegemoment auf die Tilgernabe 30 verlagert sind.

Durch den Einsatz der erfindungsgemäßen Kurbelwelle mit Tilger ergeben sich neue Abstimmungsmöglichkeiten an der Drehfeder in bezug auf Festlegung der optimalen Federrate bzw. Dämpfung, da die Drehfeder von den bislang ungedämpften Drehschwingungen weitgehend entlastet wird.

## Patentansprüche

1. Kurbelwelle einer periodisch angeregten Kraft- oder Arbeitsmaschine mit einem daran festgelegten Tilger, der zumindest einen um eine Rotationsachse drehbaren Nabenteil (1) sowie mehrere Tilgermassen (2) umfaßt, die um von der Rotationsachse (3) beabstandete Schwenkachsen der Rotationsbewegung (4) folgend schwenkbar sind, wobei sich der Schwerpunkt der jeweiligen Tilgermasse (2) drehzahlabhängig dadurch verlagert, daß die Schwenkachsen (5) der Tilgermassen (2) in Abhängigkeit der Drehzahl radial verlagerbar geführt sind, **dadurch gekennzeichnet, daß** der Tilger direkt an einem mit der Kurbelwelle (13) verbundenen Schwungrad (18) der Kraft- oder Arbeitsmaschine angebracht ist und daß der Tilger ein Widerlager (29) für eine Anpreßfeder (26) einer Kupplung aufweist.

2. Kurbelwelle nach Anspruche 1, **dadurch gekennzeichnet, daß** zwischen dem Schwungrad (18) und dem Tilger eine Kupplungsscheibe (24) mit Druckplatte (23) und Kupplungsdeckel (20) angeordnet ist.

3. Kurbelwelle nach einem der Ansprüche 1 oder 2, **dadurch gekennzeichnet, daß** der Tilger Führungsbolzen (22) für die Druckplatte (23) aufweist.

4. Kurbelwelle nach einem der Ansprüche 1 bis 3, **dadurch gekennzeichnet, daß** jede Tilgermasse (2) durch zwei in Umfangsrichtung beabstandete, sich parallel zur Rotationsachse (3) erstreckende Bolzen (5) in dem Nabenteil (1) gelagert ist und wobei die Bolzen (5) auf Kurvenbahnen (6) abrollbar sind, die im Bereich des Nabenteils (1) ein U-förmig in Richtung der Rotationsachse (3) und im Bereich der Tilgermassen (2) ein U-förmig in die entgegengesetzter Richtung geöffnetes Profil haben, und daß die Bolzen (5) auf den von den jeweiligen Kurvenbahnen (6) abgewandten Seiten durch eine Führungsbahn (7) geführt sind.

5. Kurbelwelle nach Anspruch 4, **dadurch gekennzeichnet, daß** die Führungsbahn (7) aus einer Dämpfungsschicht (8) aus einem polymeren Werkstoff besteht.

6. Kurbelwelle nach Anspruch 4 oder 5, **dadurch gekennzeichnet, daß** die Dämpfungsschicht (8) aus einem elastomeren Werkstoff bestehen.

7. Kurbelwelle nach einem der Ansprüche 4 bis 6, **dadurch gekennzeichnet, daß** die Dämpfungsschicht (8) in Umfangsrichtung beiderseits in Anschlagflächen (9) endet, durch die die Umfangsbeweglichkeit der Bolzen (5) auf einen festen Wert begrenzt ist.

8. Kurbelwelle nach einem der Ansprüche 4 bis 7, **dadurch gekennzeichnet, daß** die Kurvenbahnen (6) einen Bestandteil von Einsatzstücken (6.1 / 6.2) bilden.

9. Kurbelwelle nach Anspruch 8, **dadurch gekennzeichnet, daß** die Einsatzstücke (6.1 / 6.2) und die Dämpfungsschichten (8) einen Bestandteil von Einsatzteilen bilden, die in Ausnehmungen (10) des Nabenteils (1) und der Tilgermassen (2) unverrückbar aufgenommen sind.

10. Kurbelwelle nach Anspruch 9, **dadurch gekennzeichnet, daß** der die Dämpfungsschichten (8) bildende Werkstoffkörper nach dem Einfügen der Einsatzstücke (6.1) in die Ausnehmungen (10) durch unmittelbares Anformen und Verfestigen mit den Ausnehmungen (10) und den Einsatzstücken (6.1) verbunden ist.

11. Kurbelwelle nach einem der Ansprüche 4 bis 10, **dadurch gekennzeichnet, daß** ein Freiraum zwischen der Tilgermasse (2) bzw. Nabe (1) und den Einsatzstücken (6.1/6.2) vorhanden ist und daß der Freiraum mit dem Werkstoff der Dämpfungsschicht gefüllt ist und eine Toleranzausgleichsschicht (8.1, 8.2) bildet.

12. Kurbelwelle nach Anspruch 11, **dadurch gekennzeichnet, daß** die Toleranzausgleichsschicht (8.1, 8.2) und die Dämpfungsschicht einstückig ineinander übergehend ausgebildet sind.

13. Kurbelwelle nach einem der Ansprüche 8 bis 12, **dadurch gekennzeichnet, daß** die Einsatzstücke (6.1) durch Strangpressen erzeugt sind.

## Claims

1. A crankshaft of a periodically excited prime mover or driven machine with an absorber fixed to it, said absorber comprising at least one hub part (1), which can be rotated about an axis of rotation, and also a plurality of absorber masses (2), which can be pivoted about pivot axes at a distance from the axis of rotation (3) in such a way as to follow the rotational movement (4), the centre of gravity of the respective absorber mass (2) being displaced in a rotational-speed-dependent manner by the pivot axes (5) of the absorber masses (2) being guided in a radially displaceable manner dependent on the rotational speed, **characterized in that** the absorber is mounted directly on a flywheel (18) of the prime mover or driven machine connected to the crankshaft (13) and **in that** the absorber has an abutment (29) for a pressing spring (26) of a clutch.

2. A crankshaft according to claim 1, **characterized in that** a clutch disc (24) with a thrust plate (23) and a clutch cover (20) is arranged between the flywheel (18) and the absorber.

3. A crankshaft according to either one of claims 1 and 2, **characterized in that** the absorber has guide bolts (22) for the thrust plate (23).

4. A crankshaft according to any one of claims 1 to 3, **characterized in that** each absorber mass (2) is mounted in the hub part (1) by two bolts (5) spaced apart in the circumferential direction and extending parallel to the axis of rotation (3), and the bolts (5) being able to roll on camways (6), which have in the region of the hub part (1) a profile which is open in a U-shaped manner in the direction of the axis of rotation (3) and have in the region of the absorber masses (2) a profile which is open in a U-shaped manner in the opposite direction, and **in that** the bolts (5) are guided on the sides facing away from the respective camways (6) by a guideway (7).

5. A crankshaft according to claim 4, **characterized in that** the guideway (7) comprises a damping layer (8) of a polymeric material.

6. A crankshaft according to claim 4 or 5, **characterized in that** the damping layer (8) consists of an elastomeric material.

7. A crankshaft according to any one of claims 4 to 6, **characterized in that** the damping layer (8) ends in the circumferential direction on both sides in stop faces (9), by which the circumferential mobility of the bolts (5) is limited to a fixed value.

8. A crankshaft according to any one of claims 4 to 7, **characterized in that** the camways (6) form a component part of insert pieces (6.1/6.2).

9. A crankshaft according to claim 8, **characterized in that** the insert pieces (6.1/6.2) and the damping layers (8) form a component part of insert parts which are immovably accommodated in recesses (10) of the hub part (1) and of the absorber masses (2).

10. A crankshaft according to claim 9, **characterized in that**, after insertion of the insert pieces (6.1) into the recesses (10), the body of material forming the damping layers (8) is bonded to the recesses (10) and the insert pieces (6.1) by being moulded directly on and made to set.

11. A crankshaft according to any one of claims 4 to 10, **characterized in that** there is a free space between the absorber mass (2) or hub (1) and the insert pieces (6.1/6.2) and **in that** the free space is filled with the material of the damping layer and forms a tolerance-compensating layer (8.1, 8.2).

12. A crankshaft according to claim 11, **characterized in that** the tolerance-compensating layer (8.1, 8.2) and the damping layer are formed such that they merge with each other in one piece.

13. A crankshaft according to any one of claims 8 to 12, **characterized in that** the insert pieces (6.1) are produced by extrusion.

## Revendications

1. Vilebrequin d'une machine motrice ou d'une outil-machine activée périodiquement avec un amortisseur fixé solidement dessus qui comprend au moins une partie de moyeu (1) pouvant tourner autour d'un axe de rotation ainsi que plusieurs masses d'amortissement (2) qui peuvent pivoter successivement autour d'axes de pivotement du mouvement de rotation (4) situés à distance de l'axe de rotation (3), le centre de gravité de chaque masse d'amortissement (2) étant déplacé en fonction du nombre de tours de telle manière que les axes de pivotement (5) des masses d'amortissement (2) sont guidés en fonction du nombre de tours de manière déplaçable radialement, **caractérisé en ce que** l'amortisseur est agencé directement sur une roue volante (18), reliée au vilebrequin (13), de la machine motrice ou de l'outil-machine et **en ce que** l'amortisseur présente une butée (29) pour un ressort de pression (26) d'un dispositif d'accouplement.

2. Vilebrequin selon la revendication 1, **caractérisé en ce qu'**entre la roue volante (18) et l'amortisseur est disposé un disque d'embrayage (24) avec plateau de pression d'embrayage (23) et plateau de fermeture d'embrayage (20).

3. Vilebrequin selon l'une des revendications 1 ou 2, **caractérisé en ce que** l'amortisseur présente des boulons de guidage (22) pour le plateau de pression d'embrayage (23).

4. Vilebrequin selon l'une des revendications 1 à 3, **caractérisé en ce que** chaque masse d'amortissement (2) est logée dans la partie de moyeu (1) par deux boulons (5) situès à distance dans le sens circonférentiel, s'étendant parallèlement à l'axe de rotation (3) et dans lequel les boulons (5) peuvent se déplacer en roulant sur des chemins incurvés (6) qui ont dans la zone de la partie de moyeu (1) un profil ouvert en forme de U dans le sens de l'axe de rotation (3) et dans la zone des masses d'amortissement (2) un profil ouvert en forme de U dans le sens inverse et **en ce que** les boulons (5) sont guidés sur les côtés opposés aux chemins incurvés respectifs (6) grâce à une coulisse (7).

5. Vilebrequin selon la revendication 4, **caractérisé en ce que** la coulisse (7) est composée d'une couche d'amortissement (8) en matière polymère.

6. Vilebrequin selon la revendication 4 ou 5, **caractérisé en ce que** la couche d'amortissement (8) est composée d'une matière élastomère.

7. Vilebrequin selon l'une des revendications 4 à 6, **caractérisé en ce que** la couche d'amortissement (8) se termine dans le sens circonférentiel des deux côtés dans des surfaces de butée (9), par lesquelles la mobilité circonférentielle des boulons (5) est limitée à une valeur fixe.

8. Vilebrequin selon l'une des revendications 4 à 7, **caractérisé en ce que** les chemins incurvés (6) forment une partie constitutive des pièces intercalaires (6.1/6.2).

9. Vilebrequin selon la revendication 8, **caractérisé en ce que** les pièces intercalaires (6.1 / 6.2) et les couches d'amortissement (8) forment une partie constitutive des pièces intercalaires qui sont prises sans pouvoir être déplacées dans les évidements (10) de la partie de moyeu (1) et des masses d'amortissement (2).

10. Vilebrequin selon la revendication 9, **caractérisé en ce que** la matière formant les couches d'amortissement (8) est reliée après i'insertion des pièces intercalaires (6.1) dans les évidements (10) par moulage direct et durcissement avec les évidements (10) et les pièces intercalaires (6.1).

11. Vilebrequin selon l'une des revendications 4 à 10, **caractérisé en ce qu'**un espace libre est présent entre la masse d'amortissement (2) resp. le moyeu (1) et les pièces intercalaires (6.1 / 6.2) et **en ce que** l'espace libre est rempli de la matière de la couche d'amortissement et forme une couche de compensation de tolérance (8.1, 8.2).

12. Vilebrequin selon la revendication 11, **caractérisé en ce que** la couche de compensation de tolérance (8.1, 8.2) et la couche d'amortissement sont conçues en se mêlant l'une à l'autre pour ne former qu'une seule pièce.

13. Vilebrequin selon l'une des revendications 8 à 12, **caractérisé en ce que** les pièces intercalaires (6.1) sont produites par extrusion.
